(19) Europäisches Patentamt
European Patent Office
Office européen des brevets

(11) Veröffentlichungsnummer: **0 246 570**
**B1**

# (12) EUROPÄISCHE PATENTSCHRIFT

(45) Veröffentlichungstag der Patentschrift: **13.09.89**

(51) Int. Cl.[4]: **C07C 103/84**, C07C 143/78, C09D 5/08

(21) Anmeldenummer: **87107056.1**

(22) Anmeldetag: **15.05.87**

(54) **Zink- und/oder Bleisalze von Carbonsäuren und deren Verwendung als Korrosionsschutzmittel.**

(30) Priorität: **17.05.86 DE 3616721**

(43) Veröffentlichungstag der Anmeldung: **25.11.87 Patentblatt 87/48**

(45) Bekanntmachung des Hinweises auf die Patenterteilung: **13.09.89 Patentblatt 89/37**

(84) Benannte Vertragsstaaten: **AT BE CH DE ES FR GB IT LI NL SE**

(56) Entgegenhaltungen:
**DE-A- 2 947 418**
**DE-C- 2 502 781**
**FR-A- 1 594 535**

(73) Patentinhaber: **BASF Lacke + Farben Aktiengesellschaft, Max-Winkelmann-Strasse 80, D-4400 Münster(DE)**

(72) Erfinder: **Liedek, Egon, Dr., Holunder-Weg 16, D-7300 Esslingen(DE)**
Erfinder: **Haegele, Gerhard, Dr., Arnold-Cahn-Weg 10, D-7000 Stuttgart 50(DE)**

(74) Vertreter: **Karau, Wolfgang Dr. et al, BASF Aktiengesellschaft Carl-Bosch-Strasse 38, D-6700 Ludwigshafen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Es wurden schon zahlreiche Produkte, die Mennige und Pigmente auf der Basis Zinkchromat als Korrosionsinhibitoren ersetzen sollen, vorgeschlagen. Diese Ersatzprodukte enthalten vorwiegend metallhaltige organische Verbindungen.

So werden z.B. in der DE-PS 25 02 781 Zink- und Bleisalze und Gemische dieser Salze auf der Basis von 5-Nitroisophthalsäure als rostschützende Zusätze für Anstrichmittel beschrieben. Von den in dieser Patentschrift beschriebenen Salzen wird vor allem das Zinksalz der 5-Nitroisophthalsäure technisch angewendet. Ein Nachteil der in der DE-PS 256 02 781 beschriebenen Produkte ist jedoch, daß ihre Wirkung und Anwendungsbreite begrenzt sind. So wird z.B. bemängelt, daß eine ausreichende Wirkung in wäßrigen Anstrichsystemen nicht vorhanden ist.

Ähnlich verhalten sich die Zink- und Bleisalze, die in den DE-OS 28 07 698 und 28 24 508 beschrieben werden.

Zur Bearbeitung der sich laufend ändernden und vielschichtigen Problematik der Rostinhibierung mit Hilfe von Anstrichmitteln ist die Bereitstellung weiterer aktiver Substanzen mit in verschiedener Richtung verbesserten Eigenschaften erwünscht. Bereits das Angebot weiterer aktiver Substanzen, die im Vergleich zum Stand der Technik als gleichwertige Alternativen anzusehen sind, kann technisch fortschrittlich sein, da oft erst umfangreiche Erfahrungen bei spezifischen technischen Anwendungen Vorteile erkennen lassen.

Aufgabe der vorliegenden Erfindung war es, weitere für den Korrosionsschutz geeignete Pigmente bereitzustellen, die nicht die Nachteile der bekannten Korrosionsschutzpigmente aufweisen.

Die Erfindung betrifft Zink-, Blei- oder Zink/Blei-Salze von Carbonsäuren der Formel

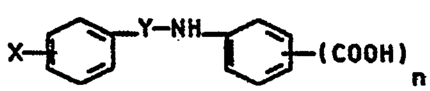

(I),

in der
Y für -CO- oder $-SO_2-$,
X für Wasserstoff oder Nitro und
n für 1 oder 2 stehen.

Die neuen Salze der Erfindung weisen im Vergleich zu den nächstliegenden aus der DE-PS 25 02 781 bekannten Zink- bzw. Bleisalzen z.B. in lufttrocknenden Leinöl/Holzöl-Alkydharzen bessere Korrosionsschutzwerte auf. Außerdem sind die Salze gemäß der vorliegenden Erfindung auch für wäßrige Anstrichsysteme geeignet. z.B. für wasserverdünnbare Alkydharze.

Bevorzugt sind Zink- und/oder Bleisalze der Carbonsäure (I), in der X Wasserstoff bedeutet.

Weiterhin sind Salze von Carbonsäuren (I) hervorzuheben, in denen Y $-SO_2-$ bedeutet.

Besonders bevorzugt sind wegen besonders guter Inhibitorwirkung die Zink- und/oder Bleisalze der Carbonsäure (II)

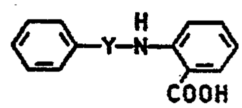

(II) ,

in der Y für -CO-, insbesondere für $-SO_2-$ steht.

Ganz besonders bevorzugt sind basische Zink- und/oder Bleisalze von Carbonsäuren (I) insbesondere der Carbonsäuren (II), bei denen das Verhältnis Carbonsäure zu Zink und/oder Blei 1 zu 1 Mol beträgt.

Diese basischen Salze entsprechen der Formel (III)

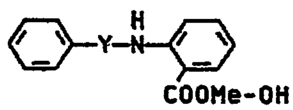

(III),

in der Y für -CO-, insbesondere für $-SO_2-$ und Me für Zn, Pb oder Gemischen von Zn und Pb stehen.

Die neuen Salze sind in den flüssigen Anstrichmitteln im allgemeinen in Mengen zwischen 0,2 und 5, vorzugsweise zwischen 0,5 und 2 Gew.%, bezogen auf den Feststoff, enthalten.

Die neuen Zink-, Blei- oder Zink-/Bleisalze werden in an sich bekannter Weise entweder durch Umsetzen der Alkalimetallsalze der Säuren (I) oder (II) mit löslichen Zink-, Bleisalzen oder deren Gemischen, wie Zinksulfat und/oder Bleinitrat oder durch Umsetzen der freien Säuren (I) oder (II) mit Zinkoxid und/oder Bleioxid in wäßrigem Medium in der Wärme erhalten.

Durch Variation des Verhältnisses Carbonsäure (I) oder (II) zu Zink-, zu Bleiverbindungen oder Gemischen davon, der Konzentration, der Temperatur, der Zeit und des pH-Wertes werden einheitliche d.h. definierte Zink-, Blei- bzw. Zink/Bleiverbindungen mit unterschiedlicher Basizität erhalten.

Die Neutralsalze von (I) erhält man in der Regel bei einem Verhältnis von 2 Äquivalent Carbonsäure und 2 Äquivalent (= 1 Mol) Zink- und/oder Bleiverbindung in neutralem Reaktionsmedium. Zur Herstellung der basischen Salze wendet man je Äquivalent Carbonsäure zwei Äquivalente (= 1 Mol) Zink- und/oder Bleioxid an, wobei der dabei resultierende höhere pH-Wert zur Bildung der basischen Salze ausreicht. Verwendet man anstelle der Oxide die entsprechenden wasserlöslichen Salze, muß dem Gemisch die äquivalente Menge an Basen: 2 Äquivalent je Äquivalent Carbonsäure zugegeben werden, so daß die Bildung der basischen Salze im alkalischen Bereich erfolgt.

Als Basen kommen vor allem die Alkalimetallhydroxide wie Natrium- und Kaliumhydroxid in Form der wäßrigen Lösungen in Betracht.

Das wäßrige Reaktionsgemisch wird solange bei der gewünschten Temperatur gehalten bis der pH-Wert der wäßrigen Phase konstant bleibt. Die ausgefallenen Salze von (I) werden in üblicher Weise isoliert, gewaschen und getrocknet.

Die Beurteilung, welche Verbindung entstanden ist, erfolgt im allgemeinen durch Vergleich der Analysendaten, der IR-Spektren und der Röntgendiffraktogramme. In der Regel läßt sich nicht vorhersagen, ob von einer organischen Säure stabile basische Zink- und/oder Bleisalze hergestellt werden können.

Die Herstellung der Salze ist in den Beispielen beschrieben.

I. Ausführungsbeispiele

Beispiel 1

12,06 g (0,05 M) 2-Benzoylaminobenzoesäure werden in 250 ml Wasser durch Zugeben von 25 ml 4n NaOH bei 80°C gelöst. Nach Zugabe von 14,38 g $ZnSO_4\cdot,7H_2O$ (0,05 M = 0,1 Äquival) in 40 ml Wasser wird die feine Nadeln enthaltende schaumige Suspension bei 80°C gerührt, bis sich nach 4 h ein aus langen Nadeln bestehendes Produkt gebildet hat. Der pH-Wert der Suspension: 7,5. Nach dem Kühlen, Absaugen und Waschen erhält man 15,8 g (92,5 % d.Th.) eines Zinksalzes mit der Zusammensetzung $C_{14}H_{11}NO_4Zn$.

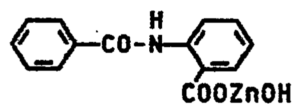

Beispiel 2

4,07 g ZnO (0,05 M = 0,1 Äquival) in 150 ml Wasser werden auf 90°C erhitzt. Nach Zugabe von 12,06 g (0,05 M = 0,05 Äquival) 2-Benzoylaminobenzoesäure wird die gebildete schaumige Suspension bei 90°C weitergerührt, bis sich der pH-Wert stabilisiert und eine plättchenförmige Kristallform entstanden ist. Am Ende liegt der pH-Wert bei 7,0. Ausbeute: 15,6 g (= 95 % d.Th.) eines Zinksalzes, das chemisch die gleiche Zusammensetzung hat, wie das nach Beispiel 1 erhaltene, jedoch ein abweichendes IR-Spektrum aufweist.

Beispiel 3

12,06 g (0,05 m) 2-Benzoylaminobenzoesäure in 250 ml Wasser werden auf 50°C erwärmt und mit 12,5 ml 4n NaOH (0,05 M) gelöst. Nach Zugabe von 7,19 g (0,025 M = 0,05 Äquival) $ZnSO_4\cdot 7H_2O$ in 40 ml Wasser wird bei 50°C bis zur pH-Konstanz weitergerührt. Der pH-Wert stellt sich auf 7,3 ein. Nach dem Absaugen und Waschen des nadeligen Niederschalgs resultieren 13,4 g (95,3 % d.Th.) eines Zinksalzes der Zusammensetzung $C_{28}H_{20}N_2O_6Zn$, dessen IR-Spektrum von dem der nach den Beispielen 1 und 2 erhaltenen Salze abweicht.

Beispiel 4

Zu 13,87 g (0,05 M = 0,05 Äquival) 2-Phenylsulfonylaminobenzoesäure in 150 ml Wasser werden 2,03 g ZnO (0,025 M = 0,05 Äquival) zugegeben und die Suspension unter Rühren auf 80°C erwärmt. Der pH-Wert stellt sich auf pH 6,2 ein. Nach Aufarbeitung des plättchenförmigen Niederschlages resultieren 13,6 g eines Zinksalzes, dessen Analysendaten einem neutralen Zink-di-(2-Phenylsulfonylaminobenzoat) entsprechen.

Beispiel 5

13,87 g (0,05 M) 2-Phenylsulfonylaminobenzoesäure in 150 ml Wasser werden bei Raumtemperatur mit 25 ml 4n NaOH (0,1 M) gelöst, mit 14,38 g (0,05 M) $ZnSO_4\cdot 7H_2O$ in 100 ml Wasser versetzt und die entstehende Suspension bis zur pH-Konstanz gerührt. Der pH-Wert hat sich dann auf 7,4 eingestellt. Nach der üblichen Aufarbeitung erhält man 11,5 g einer Zinkverbindung, deren Analysendaten einem basischen Zinksalz entsprechen, das 1 Mol (= 2 Äquival) Zn pro Mol (= Äquival) Säure enthält.

Beispiel 6

9,64 g (0,03 M) 5-Phenylsulfonylaminoisophthalsäure in 150 ml Wasser werden auf 80°C erhitzt und mit 30 ml 4n NaOH (0,12 M) gelöst. Dann werden 17,25 g (0,06 M $ZnSO_4 \cdot 7H_2O$) in 60 ml Wasser zugegeben und die Erwärmung unter Rühren bis zur pH-Konstanz fortgesetzt. Der pH-Wert stellt sich auf 7,0 ein. Ausbeute: 12,8 g (81,2 % d.Th.) eines basischen Produkts aus 2 Mol (= 4 Äquival) Zn pro Mol (= 2 Äquival) Dicarbonsäure.

Beispiel 7

13,87 g (0,05 M) 2-Phenylsulfonylaminobenzoesäure in 130 ml Wasser werden mit 12,5 ml (0,052 M) 4n NaOH unter Erwärmen gelöst. Nach Zugabe von 8,28 g (0,025 M = 0,05 Äquival) Pb $(NO_3)_2$ in 40 ml Wasser, weiterrühren bei 50°C bis zur pH-Konstanz. Der pH-Wert stellte sich auf 5,8 ein. Nach üblicher Aufarbeitung resultieren 18,5 g eines nadeligen Produktes, dessen Analysendaten dem Blei-di(2-Phenylsulfonylaminobenzoat) entsprechen (2 Äquival Pb zu 2 Äquival Carbonsäure).

Beispiel 8

13,87 g (0,05 M) 2-Phenylsulfonylaminobenzoesäure in 130 ml Wasser werden mit 25 ml (0,1 M) 4n NaOH gelöst. Nach Zugabe von 16,56 g (0,05 M) Pb $(NO_3)_2$ in 60 ml Wasser wird bei 50°C bis zur pH-Konstanz gerührt. Es stellt sich ein pH-Wert von 6,3 ein. Ausbeute: 24,2 g eines Produktes, dessen Analysendaten dem bleireicheren basischen Salz der eingesetzten organischen Säure entsprechen und dessen IR-Spektrum von dem der nach Beispiel 7 erhaltenen Verbindung abweicht.

Beispiel 9

Es wird wie in Beispiel 6 verfahren, jedoch wird die 5-Phenylsulfonylaminoisophthalsäure durch die äquivalente Menge 5-Benzoylaminoisophthalsäure ersetzt.

Man erhält in guter Ausbeute ein basisches Salz.

Beispiel 10

Man verfährt wie im Beispiel 1, verwendet jedoch anstelle von 2-Benzoylaminobenzoesäure die gleiche Menge 3-Benzoylaminobenzoesäure.

Man erhält 15,7 g des basischen Zinksalzes.

Beispiel 11

Man verfährt wie im Beispiel 1, verwendet jedoch 4-Benzoylaminobenzoesäure anstelle der 2-Benzoylaminobenzoesäure.

Man erhält 15,8 g basisches Zinksalz.

II. Anwendung und Prüfung der Salze auf Korrosionsschutzwirkung

Die Prüfung erfolgt nach DIN 50 021 nach 200 und 400 Stunden im Salzsprühtest. Als Testplatten dienen Stahlbleche USt 1405 (ungebondert). Diese werden auf einer Lackschleuder beschichtet und zwar so, daß bei einer Pigmentvolumenkonzentration (PVK) von 36 % eine Schichtdicke von 40 µm resultiert. Die Lackierung wird 1 Woche getrocknet, danach 2 Stunden bei 50°C. Dann werden die Überzüge vergleichbar angeritzt und dann dem Test unterzogen. Die Anstrichmittel wurden nach folgenden Rezepturen hergestellt.

II. a) nichtwäßriges Anstrichmittel 1,5 g zu prüfende Substanz,
16,5 g Mikrotalkum,
12 g Millicarb,
10 g Eisenoxidrot,
75 g eines lufttrocknenden Leinöl-/Holzöl-Alkydharzes.

II. b) wäßriges Anstrichmittel 1 g zu prüfende Substanz,
20 g Millicarb,

19 g EWO-Pulver,
10 g Eisenoxidrot,
40 g Bindemittel (63 %ige Zubereitung eines lufttrocknenden, wasserverdünnbaren Alkydharzes),
4 g Triethylamin (Additiv) und
6 g Lösungsmittel.

Die Gemische werden 2 Stunden auf einer Schüttelmühle (RED DEVIL®) dispergiert. Das Anstrichmittel wird dann von den Mahlkugeln abzentrifugiert.

Nach der korrosiven Belastung der Testplatten in der Salzsprühkammer werden die Anstriche zu einem Teil abgelaugt und die Platten bewertet.

Beurteilt wird die abgelaugte Fläche, die Unterrostung am Ritz und die Enthaftung durch einen Klebestreifen-Abziehtest. Durch Addition der Zahlenwerte resultiert der Korrosionsschutzwert (KW), der einen wirkungsabhängigen Prozentsatz zum total intakten Anstrich (KW = 100) zum Ausdruck bringt.

Anstriche mit guter Rostschutzwirkung liegen im Bereich um KW 50, während KW ≧ 70 als sehr gut zu bezeichnen sind. Bei Testplatten ohne Inhibitorzusatz resultiert KW 0.

Nach II. a) wurden mit den in der Tabelle 1 angegebenen Salzen Anstrichmittel hergestellt. Die beschichteten Bleche wurden nach DIN 50 021 getestet und nach 400 Stunden beurteilt.

Tabelle 1

Zusammenstellung der Ergebnisse der Prüfung auf Korrosionsschutzwirkung

| Salz des Beispiels | Korrosionsschutzwert [400 h] | Stand der Technik[1)] |
|---|---|---|
| 1 | 80 | 72 |
| 2 | 85 | 75 |
| 4 | 62 | 77 |
| 5 | 79 | 71 |
| 6 | 73 | 57 |
| 9 | 70 | 55 |
| 10 | 73 | 62 |
| 11 | 78 | 70 |

[1)] Zink-5-Nitroisophthalat nach DE-PS 2 502 781

Nach II. b) wurden mit den in der Tabelle 2 angegebenen Salze wasserverdünnbare Anstrichmittel hergestellt. Die beschichteten Bleche wurde nach DIN 50 021 getestet und nach 400 Stunden beurteilt.

Tabelle 2

Zusammenstellung der Ergebnisse der Prüfung auf Korrosionsschutzwirkung

| Salz des Beispiels | Korrosionsschutzwert [400 h] | Stand der Technik[1)] |
|---|---|---|
| 2 | 78 | 38 |
| 4 | 60 | 38 |

[1)] Zink-5-Nitroisophthalat nach DE-PS 2 502 781

**Patentansprüche für die Vertragsstaaten: BE, CH, DE, FR, GB, IT, LI, NL, SE**

1. Zink-, Blei- oder Zink/Blei-Salze von Carbonsäuren der Formel

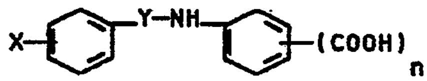

in der
Y für -CO- oder $-SO_2-$,
X für Wasserstoff oder Nitro und
n für 1 oder 2 stehen.

2. Zink-, Blei- oder Zink/Blei-Salze gemäß Anspruch 1, dadurch gekennzeichnet, daß X für Wasserstoff steht.

3. Zink-, Blei- oder Zink/Blei-Salze gemäß Anspruch 1 oder 2, dadurch gekennzeichnet, daß Y für $-SO_2-$ steht.

4. Zink-, Blei- oder Zink-Blei-Salze gemäß Anspruch 3, dadurch gekennzeichnet, daß die Carbonsäure der Formel

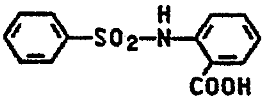

entspricht.

5. Zink-, Blei- oder Zink-Blei-Salze gemäß Anspruch 1, 2, 3 oder 4, dadurch gekennzeichnet, daß das Verhältnis Carbonsäure zu Zink und/oder Blei 1:1 Mol beträgt.

6. Zink- und Bleisalze gemäß Anspruch 5, gekennzeichnet durch die Formel

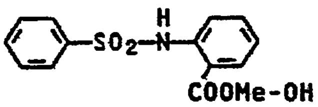

in der Me für Zn oder Pb steht.

7. Verwendung der Zink-, Blei- oder Zink/Blei-Salze gemäß den Ansprüchen 1 bis 6 als Korrosionsschutzmittel in Lacken.

**Patentansprüche für die Vertragsstaaten : AT, ES**

1. Verfahren zur Herstellung von Zink-, Blei- oder Zink/Bleisalzen von Carbonsäuren der Formel (I)

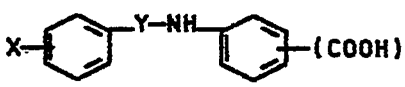

(I)

in der
Y für -CO- oder $-SO_2-$,
X für Wasserstoff oder Nitro und
n für 1 oder 2 stehen, dadurch gekennzeichnet, daß man die Carbonsäuren der Formel (I) entweder in Form der Alkalimetallsalze mit löslichen Zink- oder Bleisalzen oder Gemischen davon oder die freien Säuren (I) mit Zinkoxid oder Bleioxid oder Gemischen davon im wäßrigen Medium in der Wärme umsetzt.

2. Verfahren gemäß Anspruch 1, dadurch gekennzeichnet, daß man Carbonsäuren (I) umsetzt, in denen X für Wasserstoff steht.

3. Verfahren gemäß Anspruch 1 oder 2, dadurch gekennzeichnet, daß man Carbonsäuren (I) umsetzt, in denen Y für $-SO_2-$ steht.

4. Verfahren gemäß Anspruch 3, dadurch gekennzeichnet, daß man als Carbonsäure (I) eine der Formel

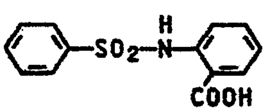

umsetzt.

5. Verfahren gemäß den Ansprüchen 1, 2, 3 oder 4, dadurch gekennzeichnet, daß das Verhältnis Carbonsäure (I) zu Zink oder Blei oder Gemischen aus Zink und Blei bei der Umsetzung 1:1 Mol beträgt.

6. Verfahren gemäß Anspruch 5, daß eine Verbindung der Formel

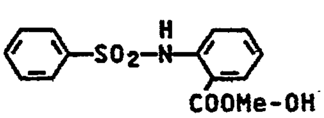

in der Me für Zink, Blei oder Zink und Blei stehen, hergestellt wird.

7. Verwendung der nach dem Verfahren gemäß den Ansprüchen 1 bis 6 erhaltenen Verfahrensprodukte als Korrosionsschutzmittel in Lacken.

**Claims for the Contracting States BE, CH, DE, FR, GB, IT, LI, NL, SE**

1. A zinc, lead or zinc/lead salt of a carboxylic acid of the formula

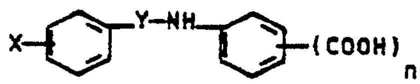

where Y is $-CO-$ or $-SO_2-$, X is hydrogen or nitro and n is 1 or 2.

2. A zinc, lead or zinc/lead salt as claimed in claim 1, wherein X is hydrogen.

3. A zinc, lead or zinc/lead salt as claimed in claim 1 or 2, wherein Y is $-SO_2-$.

4. A zinc, lead or zinc/lead salt as claimed in claim 3, wherein the carboxylic acid is of the formula

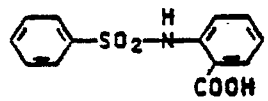

5. A zinc lead or zinc/lead salt as claimed in any of claims 1 to 4, wherein the molar ratio of the carboxylic acid to the zinc and/or lead is 1:1.

6. A zinc or lead salt as claimed in claim 5, of the formula

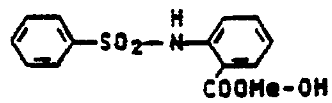

where Me is Zn or Pb.

7. Use of a zinc, lead or zinc/lead salt as claimed in any of claims 1 to 6 as a corrosion inhibitor in coatings.

**Claims for the Contracting States: AT, ES**

1. A process for the preparation of a zinc, lead or zinc/lead salt of a carboxylic acid of the formula (I)

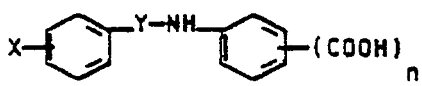

(I)

where Y is $-CO-$ or $-SO_2-$, X is hydrogen or nitro and n is 1 or 2, wherein the carboxylic acid of the formula (I) is reacted either in the form of an alkali metal salt with a soluble zinc or lead salt or a mixture thereof or as a free acid (I) with zinc oxide or lead oxide or a mixture thereof in an aqueous medium at elevated temperatures.

2. A process as claimed in claim 1, which comprises reacting a carboxylic acid (I) where X is hydrogen.

3. A process as claimed in claim 1 or 2, wherein in the carboxylic acid (I) Y is $-SO_2-$.

4. A process as claimed in claim 3, wherein the carboxylic acid (I) is of the formula

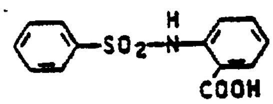

5. A process as claimed in any of claims 1 to 4, wherein the molar ratio of the carboxylic acid (I) to the zinc or lead or mixture thereof in the reaction is 1:1.

6. A process as claimed in claim 5, wherein a compound of the formula

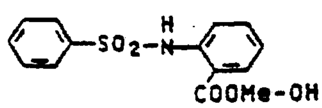

where Me is zinc or lead or a mixture thereof is prepared.

7. Use of a product obtained by a process as claimed in any of claims 1 to 6, as a corrosion inhibitor in coatings.

**Revendications pour les Etats Contractants: BE, CH, DE, FR, GB, IT, LI, NL, SE**

1. Sels de zinc, de plomb ou de zinc/plomb d'acides carboxyliques de formule

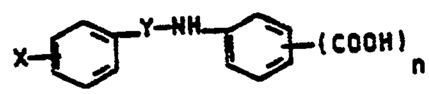

dans laquelle
Y représente –CO– ou $SO_2$–,
X représente de l'hydrogène ou le groupe nitro et
n représente 1 ou 2.

2. Sels de zinc, de plomb ou de zinc/plomb suivant la revendication 1, caractérisés en ce que X représente de l'hydrogène.

3. Sels de zinc, de plomb ou de zinc/plomb suivant la revendication 1 ou 2, caractérisés en ce que Y représente –$SO_2$–.

4. Sels de zinc, de plomb ou de zinc/plomb suivant la revendication 3, caractérisés en ce que l'acide carboxylique est un acide de formule

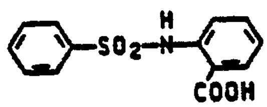

5. Sels de zinc, de plomb ou de zinc/plomb suivant les revendications 1, 2, 3 ou 4, caractérisés en ce que le rapport de l'acide carboxylique au zinc et/ou au plomb est de 1:1.

6. Sels de zinc et de plomb suivant la revendication 5, caractérisés par la formule

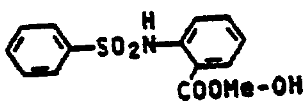

dans laquelle Me représente du zinc ou du plomb.

7. Utilisation des sels de zinc, de plomb ou de zinc/plomb suivant les revendications 1 à 6 comme agents anticorrosion dans des laques.

**Revendications pour les Etats Contractants: AT, ES**

1. Procédé de préparation de sels de zinc, de plomb ou de zinc/plomb d'acides carboxyliques de formule (I)

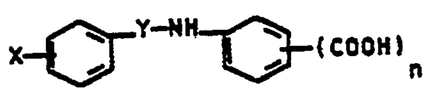

(I)

dans laquelle
Y représente –CO– ou –$SO_2$–,
X représente de l'hydrogène ou le groupe nitro et
n représente 1 ou 2, caractérisé en ce que l'on fait réagir à chaud et en milieu aqueux les acides carboxyliques de la formule (I), soit sous forme des sels de métaux alcalins avec des sels solubles de zinc ou de plomb ou des mélanges de ceux-ci, soit sous forme d'acides libres (I) avec de l'oxyde de zinc ou de l'oxyde de plomb ou des mélanges de ces oxydes.

2. Procédé suivant la revendication 1, caractérisé en ce que l'on fait réagir des acides carboxyliques (I), dans lesquels X représente de l'hydrogène.

3. Procédé suivant la revendication 1 ou 2, caractérisé en ce que l'on fait réagir des acides carboxyliques (I), dans lesquels Y représente –$SO_2$–.

4. Procédé suivant la revendication 3, caractérisé en ce que l'on fait réagir, comme acide carboxylique (I), un acide de formule

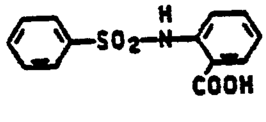

5. Procédé suivant les revendications 1, 2, 3 ou 4, caractérisé en ce que, lors de la réaction, le rapport de l'acide carboxylique (I) au zinc ou au plomb ou à des mélanges de zinc et de plomb est de 1:1.

6. Procédé suivant la revendication 5, caractérisé en ce que l'on prépare un composé de formule

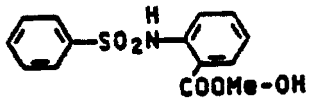

dans laquelle Me représente du zinc, du plomb ou du zinc et du plomb.

7. Utilisation des produits obtenus par le procédé suivant les revendications 1 à 6 comme agents anti-corrosion dans des laques.